# EUROPÄISCHE PATENTANMELDUNG

(11) **EP 2 672 197 A1**
(43) Veröffentlichungstag der Anmeldung: **11.12.2013**
(21) Anmeldenummer: 12170958.8
(22) Anmeldetag: 06.06.2012
(51) Int. Cl.: F24J 2/52, E04D 3/35

(54) **Montageanordnung zur dachseitigen Montage von Flächenkörpern an einem Bauwerk**

(71) Anmelder: Hörmann Energietechnik GmbH & Co. KG, 86807 Buchloe (DE)
(72) Erfinder: Merz, Bruno, 87668 Rieden (DE); Heinzler, Elmar, 86875 Waal (DE); Frömel, Martin, 87742 Dirlewang (DE)
(74) Vertreter: Gebauer, Dieter Edmund

(57) **Zusammenfassung**

Die Erfindung betrifft eine Montageanordnung zur dachseitigen Montage von Flächenkörpern an einem Bauwerk, welche umfasst: eine Mehrzahl rechteckförmiger Flächenkörper mit Längs- und Querrändern; ein Traggerüst aus parallelen Profilleisten, die sich entlang einer Längsrichtung erstrecken und jeweils über wenigstens ein Befestigungsorgan verfügen, das dazu ausgebildet sind, in einer zur Längsrichtung senkrechten Querrichtung benachbarte Flächenkörper an deren Längsrändern zu befestigen; sowie Verbindungselemente, die jeweils zur Verbindung zweier in Längsrichtung benachbarter Flächenkörper an deren Querrändern dienen, wobei jedes Verbindungselement aus einem an einem Querrand des einen Flächenkörpers befestigten ersten Verbindungsteil und einem an einem gegenüberliegenden Querrand des anderen Flächenkörpers befestigten zweiten Verbindungsteil besteht, wobei der erste Verbindungsteil einen Vorsprung und das zweite Verbindungsteil eine Vertiefung für den Vorsprung aufweist, wobei der Vorsprung in die Vertiefung so einsteckbar ist, dass die beiden Verbindungsteile (14, 15) in Längsrichtung (x) fest miteinander verbunden sind.

## Beschreibung

Die Erfindung liegt auf dem Gebiet der Dachmontagetechnik und betrifft eine Montageanordnung zur dachseitigen Montage einer Mehrzahl von Flächenkörpern an einem Bauwerk in Massiv- oder Skelettbauweise.

Vor dem Hintergrund schwindender fossiler Ressourcen werden zunehmend Solarkollektoren und Photovoltaik- bzw. Solarmodule zur Energiegewinnung eingesetzt. Während in Solarkollektoren ein zirkulierendes Fluid durch Sonnenlicht aufgeheizt werden kann, beispielsweise um einen Pufferspeicher zu erwärmen, kann in Solarmodulen einfallendes Sonnenlicht durch Solarzellen direkt in elektrische Energie umgewandelt werden.

Es ist gängige Praxis, Solarkollektoren und Solarmodule auf den Dächern von Wohn- und Wirtschaftsgebäuden zu montieren. Diese werden im Handel in Form rechteckiger Flächenkörper angeboten, wobei eine Dachmontage in der Regel durch eine am Dach befestigte Tragkonstruktion aus miteinander verbundenen Profilleisten erfolgt. In die Patentliteratur hat eine solche Tragkonstruktion beispielsweise durch das deutsche Gebrauchsmuster DE 29606547 U1 Eingang gefunden. Die darin beschriebene Tragkonstruktion umfasst in Richtung der Dachneigung verlaufende Längsprofilleisten, die durch geeignete Halterungen an einer Gebäudedachkonstruktion angebracht sind. An den Längsprofilleisten sind parallel zum Dachfirst verlaufende Querprofilleisten befestigt, an denen die Flächenkörper fixiert werden können.

Demgegenüber besteht die Aufgabe der vorliegenden Erfindung darin, herkömmliche Montageanordnungen zur dachseitigen Montage von Flächenkörpern wie Solarkollektoren oder Solarmodule in vorteilhafter Weise weiterzubilden.

Diese und weitere Aufgaben werden nach dem Vorschlag der Erfindung durch eine Montageanordnung zur dachseitigen Montage von Flächenkörpern an einem Bauwerk mit den Merkmalen des unabhängigen Patentanspruchs gelöst. Vorteilhafte Ausgestaltungen der Erfindung sind durch die Merkmale der Unteransprüche angegeben.

Erfindungsgemäß ist eine Montageanordnung zur dachseitigen Montage von Flächenkörpern an einem Bauwerk in Massiv- oder Skelettbauweise gezeigt. Die Flächenkörper sind in Quader- bzw. Rechteckform ausgebildet und verfügen jeweils über zwei parallele erste Ränder und zwei parallele zweite Ränder, im Weiteren als Längs- und Querränder bezeichnet. In der Montageanordnung weist jeder Flächenkörper eine der äußeren Umgebung des Bauwerks zugewandte Ober- bzw. Außenseite auf, die von einer Außenfläche bzw. außenseitigen Oberfläche gebildet wird, sowie eine zum Bauwerk gewandte Unter- bzw. Innenseite, die von einer Innenfläche bzw. innenseitigen Oberfläche gebildet wird. Flächenkörper im Sinne vorliegender Erfindung sind beispielsweise transparente oder undurchsichtige Solarmodule, Solarkollektoren, sowie transparente oder undurchsichtige Dachplatten. Es versteht sich, dass diese Aufzählung nicht abschließend ist, sondern gleichermaßen andere Flächenkörper zur Dachmontage vorgesehen sein können.

Im Sinne vorliegender Erfindung umfasst der Begriff "dachseitige Montage" sowohl die Aufdach-Montage, bei welcher die Flächenkörper auf bzw. oberhalb einer beispielsweise durch eine Schalung oder Dachziegel gebildeten Dachhaut montiert werden, als auch die Indach-Montage, bei welcher die Flächenkörper einen Teil oder den kompletten Ersatz der Dachhaut bilden.

Die erfindungsgemäße Montageanordnung umfasst eine Mehrzahl Flächenkörper. Für eine Lagerung und Befestigung der Flächenkörper umfasst die Montageanordnung ein Traggerüst aus einer Mehrzahl paralleler, nebeneinander angeordneter Profilleisten, die sich jeweils entlang einer ersten Richtung bzw. Längsrichtung erstrecken. Insbesondere verfügt das Traggerüst über keine Profilleisten in einer hierzu senkrechten zweiten Richtung bzw. Querrichtung. Die Längsränder der Flächenkörper sind entlang der Längsrichtung, deren Querrändern entlang der Querrichtung anzuordnen. Durch die Längs- und Querrichtung wird eine Montageebene für die Flächenkörper aufgespannt.

Für eine Befestigung der Flächenkörper weist jede in Längsrichtung sich erstreckende Profilleiste wenigstens ein Befestigungsorgan auf, das dazu ausgebildet ist, in Querrichtung benachbarte Flächenkörper an deren Längsrändern bzw. in Längsrandzonen, welche entlang der Längsränder angeordnet sind, zu befestigen. Das Traggerüst der Montageanordnung ist zur Montage am Dach bzw. einer Dachkonstruktion eines Bauwerks vorgesehen.

Weiterhin umfasst die Montageanordnung eine Mehrzahl Verbindungselemente, die jeweils zur festen Verbindung zweier in Längsrichtung benachbarter Flächenkörper an deren Querrändern bzw. in Querrandzonen, welche entlang der Querränder angeordnet sind, dienen. Jedes Verbindungselement besteht aus einem ersten Verbindungsteil und einem damit verbindbaren bzw. verbundenen zweiten Verbindungsteil. Der erste Verbindungsteil ist an einem Querrand bzw. in einer Querrandzone entlang des Querrands des einen Flächenkörpers befestigt, während der zweite Verbindungsteil an einem gegenüberliegenden Querrand bzw. in einer Querrandzone entlang des Querrands des anderen Flächenkörpers befestigt ist.

Wesentlich hierbei ist, dass der erste Verbindungsteil einen Vorsprung und der zweite Verbindungsteil eine Vertiefung für den Vorsprung aufweist, wobei Vorsprung und Vertiefung so ausgebildet sind, dass der Vorsprung in die Vertiefung einsteckbar bzw. eingesteckt ist, wobei die beiden Verbindungsteile (lösbar) in Längsrichtung fest miteinander verbunden sind. Der Vorsprung und die Vertiefung sind zu diesem Zweck vorzugsweise form- und/oder kraftschlüssig fest miteinander verbindbar bzw. verbunden. Innerhalb der Verbindungselemente können jeweils ein oder mehrere Dichtmittel zur dichtenden Verbindung der beiden Verbindungsteile angeordnet sein, was den Vorteil hat, dass die typischer Weise aus einem für UV-Licht empfindlichen Material gefertigten Dichtmittel keiner vorzeitiger Alterung unterliegen.

Die erfindungsgemäße Montageanordnung schafft somit die Möglichkeit einer einfachen, schnellen und zuverlässigen dachseitigen Montage von Flächenkörpern an einem Bauwerk. Hierbei genügt es beispielsweise einen untersten Flächenkörper passgenau auszurichten, da die anderen Flächenkörper durch die Verbindungselemente selbsttätig in Längsrichtung ausgerichtet werden, wodurch sich die Montage der Flächenkörper stark vereinfacht. Generell zeichnet sich die Montageanordnung durch einen kostengünstigen und einfachen Aufbau aus, wodurch sich die Fertigungs- und Montagekosten verringern. Falls die Flächenkörper zumindest einen Teil der Dachhaut bilden, können sie durch eine relativ einfach zu bewerkstelligende Überkopfmontage montiert werden. In besonders vorteilhafter Weise erfolgt eine Verbindung der Flächenkörper durch die Verbindungselemente in der Ebene der Flächenkörper, so dass montagebedingte Belastungen der Flächenkörper in Längsrichtung vermieden werden können. Durch die lösbar verbundenen Verbindungselemente ist nicht nur eine einfache Montage, sondern auch eine einfache Demontage der Verbindungselemente möglich, beispielsweise um einzelne Flächenkörper auszutauschen oder zu warten. Ein wesentlicher praktischer Nutzen ergibt sich auch dadurch, dass Kanten der Flächenkörper durch die Verbindungsteile geschützt sind, so dass eine stehende Lagerung der Flächenkörper an den in Querrichtung anzuordnenden Seitenrändern problemlos möglich ist. Insgesamt zeichnet sich die Montageanordnung durch ein schlankes und ästhetisches Design aus.

Sind in einem jeweiligen Verbindungselement der Vorsprung und die Vertiefung so ausgebildet, dass sie kraftschlüssig miteinander verbunden sind, kann einem Versatz der Flächenkörper aufgrund thermischer Ausdehnung durch den Kraftschluss der Verbindungselemente effektiv entgegen gewirkt werden.

Die Verbindungselemente können grundsätzlich aus einem beliebigen Material hergestellt sein, solange das Material eine feste Verbindung der Flächenkörper in Längsrichtung gewährleistet. Beispielsweise bestehen die Verbindungselemente aus einem Metall oder einer Metalllegierung, insbesondere ein Leichtmetallwerkstoff wie Aluminium, oder aus einem Kunststoff, beispielsweise ein glasfaserverstärkter Kunststoff, wobei sich diese Materialien typischer Weise durch Langlebigkeit und eine hohe Witterungsbeständigkeit auszeichnen. Vorzugsweise bestehen die Verbindungselemente aus diesem Grund weder aus Gummi, Silikon noch einem anderen herkömmlicher Weise für Dichtungen verwendeten Material.

Eine Befestigung der Verbindungsteile an den Flächenkörpern erfolgt vorzugsweise durch Verklebung, was eine einfache Herstellung der Flächenkörper ermöglicht, wobei aber auch jede andere hierfür geeignete Befestigungstechnik eingesetzt werden kann.

Bei einer besonders vorteilhaften Ausgestaltung der erfindungsgemäßen Montageanordnung sind in einem jeweiligen Verbindungselement die beiden Verbindungsteile so ausgebildet, dass der Vorsprung mit einem zur Montageebene schräg angestellten Flächenkörper in der Vertiefung ansetzbar und durch Zueinanderbewegen der Flächenkörper sowie Absenken des schräg angestellten Flächenkörpers bis zur Montageebene in die Vertiefung gleiten kann. Diese Maßnahme ermöglicht eine besonders einfache und schnelle Verbindung der Flächenkörper durch die Verbindungselemente, wobei die Flächenkörper in Längsrichtung sukzessive montierbar sind.

Andererseits sind die beiden Verbindungsteile so ausgebildet, dass deren feste Verbindung (zerstörungsfrei) lösbar ist, wobei der Vorsprung aus der Vertiefung herausbewegt werden kann. Vorzugsweise sind zu diesem Zweck in einem jeweiligen Verbindungselement die beiden Verbindungsteile so ausgebildet, dass der Vorsprung durch schräges Anstellen zur Montageebene eines durch das Verbindungselement verbundenen Flächenkörpers und Auseinanderbewegen der Flächenkörper aus der Vertiefung gleiten kann. Diese Maßnahme ermöglicht ein besonders einfaches und schnelles Lösen der Verbindung der Flächenkörper.

Ein solches Verbindungselement, das ein Ein- bzw. Ausgleiten des Vorsprungs in bzw. aus der Vertiefung ermöglicht, kann einfach und kostengünstig beispielsweise dadurch realisiert werden, dass der Vorsprung über einen Gleitbuckel und die Vertiefung über eine vorzugsweise in Passform ausgebildete Gleitkehle zum Ein- bzw. Ausgleiten des Gleitbuckels verfügt.

In einem Verbindungselement der erfindungsgemäßen Montageanordnung sind der Vorsprung und die Vertiefung fest, insbesondere form- und/oder kraftschlüssig, miteinander verbindbar bzw. verbunden, wobei es in montagetechnischer Hinsicht vorteilhaft sein kann, wenn Vorsprung und Vertiefung so ausgebildet sind, dass sie durch eine Rastverbindung verbindbar bzw. verbunden sind. Durch eine Rastverbindung wird eine stabile kraftschlüssige und gewöhnlich auch formschlüssige Verbindung zwischen Vorsprung und Vertiefung geschaffen, wobei sich in aller Regel ein definierter Abstand zwischen den verbundenen Flächenkörpern einstellt. Eine solche Rastverbindung kann insbesondere mit dem oben genannten Gleitbuckel und der vorzugsweise in Passform ausgebildeten Gleitkehle realisiert sein, wobei das Verbindungsgegenstück so ausgebildet ist, dass der Gleitbuckel unter elastischer Verformung des Verbindungsgegenstücks in die Gleitkehle greifen kann, so dass der Gleitbuckel kraftschlüssig mit der Gleitkehle verbunden ist. Für die Montage kann es von Vorteil sein, wenn Vorsprung und Vertiefung so ausgebildet sind, dass der Vorsprung mit einem Einrastgeräusch hörbar in der Vertiefung verrastet werden kann. Dies kann in einfacher Weise durch eine entsprechende Kraftbeaufschlagung des Gleitbuckels erreicht werden. Der Monteur kann dadurch den Erfolg des Verrastens der beiden Verbindungsteile eines Verbindungselements in besonders einfacher Weise akustisch überprüfen.

Durch die Verbindungselemente werden benachbarte Flächenkörper in Längsrichtung fest miteinander verbunden, wobei die Verbindungselemente wenigstens eine statisch unterstützende, insbesondere, jedoch nicht zwingend, eine statisch tragende Funktion haben.

Bei einer möglichen Ausgestaltung der erfindungsgemäßen Montageanordnung sind die Verbindungselemente jeweils so ausgebildet, dass zwei in Längsrichtung benachbarte Flächenkörper durch das Verbindungselement starr miteinander verbunden sind. Die Verbindungselemente haben dann eine statisch tragende Funktion, so dass auf eine zusätzliche Unterstützung der Flächenkörper im Bereich der Verbindungselemente verzichtet werden kann.

Bei einer hierzu alternativen Ausgestaltung der erfindungsgemäßen Montageanordnung sind die Verbindungselemente jeweils nachgiebig ausgebildet sind, und zwar so, dass sie geeignet sind, sich einer Verformung eines durch sie verbundenen Flächenkörpers, beispielsweise eine Durchbiegung in Querrichtung, anzupassen. Dies hat den Vorteil, dass die Verbindungselemente und deren Befestigung an den Flächenkörpern, beispielsweise Verklebungen, durch Verformungen der Flächenkörper nicht belastet werden. Zudem kann auf eine zusätzliche Unterstützung der Verbindungselemente verzichtet werden.

Jedes Verbindungselement ist so ausgebildet, dass es über eine von den beiden Verbindungsteilen gebildete Ober- bzw. Außenseite verfügt, die von einer zur äußeren Umgebung des Bauwerks gewandten Außenfläche bzw. außenseitigen Oberfläche gebildet wird. Zudem verfügt es über eine von den Verbindungsteilen gebildete Unter- bzw. Innenseite, die von einer zum Bauwerk gewandten Innenfläche bzw. innenseitigen Oberfläche gebildet wird.

Bei einer vorteilhaften Ausgestaltung der erfindungsgemäßen Montageanordnung schließen die Außenflächen der Verbindungselemente mit den Außenflächen der Flächenkörper flächenbündig ab, so dass eine ebene Gesamtaußenfläche gebildet wird. Durch diese Maßnahme kann einerseits ein gutes Ablaufen von Wasser und Abrutschen von Schnee von den Flächenkörpern erreicht werden, andererseits wird einer Verschmutzung entgegen gewirkt, da sich in Längsrichtung kein Schmutz ansammeln kann.

Eine ebene Gesamtaußenfläche der Flächenkörper und Verbindungselemente kann insbesondere dadurch erreicht werden, dass die Verbindungselemente in der Ebene der Flächenkörper angeordnet und beispielsweise an der Unterseite der Flächenkörper befestigt sind, wobei eine zusätzliche Befestigung an stirnseitigen Randflächen der Flächenkörper vorgesehen sein kann. Hierdurch kann eine dauerhafte und zuverlässige Befestigung der Verbindungsteile an den Flächenkörpern sichergestellt werden.

In der erfindungsgemäßen Montageanordnung können sich die Verbindungsteile eines Verbindungselements grundsätzlich über die komplette Breite in Querrichtung des zugehörigen Flächenkörpers erstrecken. Falls die Verbindungsteile jeweils an den Unterseiten der Flächenkörper angebracht sind bzw. wenn sie sich über die Unterfläche hinaus erstrecken, ist es für eine Befestigung der Flächenkörper an den Profilleisten durch die Befestigungsorgane vorteilhaft, wenn sich die Verbindungsteile nicht über die komplette Breite der zugehörigen Flächenkörper erstrecken, sondern dass auf beiden Seiten ein Randbereich der Flächenkörper frei bleibt.

Bei einer weiteren vorteilhaften Ausgestaltung der erfindungsgemäßen Montageanordnung schließen die Innenflächen der Verbindungselemente mit den Innenflächen der Flächenkörper flächenbündig ab, so dass eine ebene Gesamtinnenfläche gebildet wird. Durch diese Maßnahme ist die Befestigung der Flächenkörper an den Profilleisten erleichtert.

Eine ebene Gesamtinnenfläche kann beispielsweise dadurch erreicht werden, dass die Flächenkörper jeweils als Verbundscheibe mit zwei miteinander verbundenen Einzelscheiben ausgebildet sind, wobei ein Querrand der einen Einzelscheibe gegenüber dem Querrand der anderen Einzelscheibe (in Längsrichtung) nach innen rückversetzt ist, so dass die andere Einzelscheibe über einen Scheibenüberstand verfügt an dem das zum Flächenkörper gehörende Verbindungsteil befestigt ist. Hierdurch kann eine dauerhafte und zuverlässige Befestigung der Verbindungsteile an den Flächenkörpern sichergestellt werden, mit der Maßgabe, dass die Gesamtinnenfläche aus Flächenkörpern und Verbindungselementen eben ist.

Bei einer bevorzugten Ausgestaltung der erfindungsgemäßen Montageanordnung erstrecken sich die Profilleisten in Richtung einer Dachneigung, d.h. von oben nach unten, so dass die Längsrichtung der Richtung der Dachneigung entspricht und sich die Querrichtung parallel zum Dachfirst erstreckt. Vorzugsweise sind die Profilleisten jeweils mit wenigstens einem in Längsrichtung (entlang der Dachneigung) verlaufenden Längskanal versehen. Der Längskanal dient zum Ableiten von Wasser, das zwischen den Flächenkörpern eindringt, so dass eine Entwässerung in Längsrichtung ermöglicht ist.

Bei vorstehender Ausgestaltung der Montageanordnung kann es vorgesehen sein, dass die Verbindungselemente jeweils mit einem in Querrichtung verlaufenden Querkanal versehen sind, der an seinen Enden jeweils in einen Längskanal der angrenzenden Profilleisten mündet. Wie der Längskanal dient auch der Querkanal zum Ableiten von Wasser, das zwischen den Flächenkörpern eindringt, so dass auch eine Entwässerung in Querrichtung ermöglicht ist. Vorteilhaft ist zu diesem Zweck die Vertiefung des Verbindungsgegenstücks so groß bemessen, dass sie bei eingestecktem Vorsprung den Querkanal bildet, was eine einfache und kostengünstige Ausbildung des Querkanals ermöglicht.

Verfügen die Verbindungselemente über einen Querkanal und erstrecken sich die Verbindungsteile jeweils über die Unterseite der Flächenkörper hinaus, ist es vorteilhaft, wenn die Profilleisten jeweils einen zentralen Längskanal und zwei seitliche Längskanäle aufweisen, wobei der zentrale Längskanal zwischen den beiden seitlichen Längskanälen angeordnet ist, wobei der Querkanal der Verbindungselemente an seinen beiden Enden jeweils in einen seitlichen Längskanal der angrenzenden Profilleisten mündet. In diesem Fall dient der zentrale Längskanal ausschließlich zur Ableitung von Wasser, das zwischen den in Querrichtung benachbarten Flächenkörpern eindringt, während die beiden seitlichen Längskanäle zum Ableiten von Wasser aus den Querkanälen dienen.

Jedoch kann auch eine alternative Ausgestaltung der Montageanordnung vorgesehen sein, bei der die Verbindungselemente einen solchen Querkanal zur Wasserableitung nicht aufweisen. In diesem Fall sind Vorsprung und Vertiefung in Passform ausgebildet, so dass bei eingestecktem Vorsprung in der Vertiefung kein Hohlraum verbleibt. Dies kann beispielsweise dann vorgesehen sein, wenn Wasser in den Verbindungselementen vermieden werden soll, beispielsweise in Gegenden mit kalter Witterung, in denen die Gefahr besteht, dass Wasser in den Verbindungselementen gefriert.

Bei einer weiteren vorteilhaften Ausgestaltung der erfindungsgemäßen Montageanordnung ist an der Unterseite der Verbindungselemente jeweils eine in Querrichtung verlaufende Kondensatrinne angeordnet, die zum Auffangen und Ableiten von an der Unterseite der Flächenkörper kondensierendem Wasser (Kondensat) dient. Die Kondensatrinnen münden an ihren beiden Enden jeweils in einen Längskanal einer Profilleiste, insbesondere in einen seitlichen Längskanal, der neben einem zentralen Längskanal angeordnet ist.

Bei einer bevorzugten Ausgestaltung der erfindungsgemäßen Montageanordnung bilden die Flächenkörper zumindest einen Teil der Dachhaut, insbesondere die komplette Dachhaut, des Bauwerks in Massiv- oder Skelettbauweise. Bei Bauwerken in Massivbauweise erfüllen Wände und Decken, die gewöhnlich aus Mauerwerk oder Beton bestehen, neben einer raumabschließenden Funktion auch eine statisch tragende Funktion. Im Unterschied hierzu verfügen Bauwerke in Skelettbauweise über ein aus Trägern zusammengesetztes Tragwerk, das im Wesentlichen nur eine tragende Funktion, jedoch keine raumabschließende Funktion hat. Vorzugsweise dient die erfindungsgemäße Montageanordnung zur Montage von Flächenkörpern an einem Bauwerk in Skelettbauweise, wobei die Flächenkörper zumindest einen Teil der Dachhaut, insbesondere die komplette Dachhaut, bilden. Werden transparente Flächenkörper eingesetzt, kann der Lichteinfall durch das Dach in gewünschter Weise durch eine geeignete Verteilung der Flächenkörper eingestellt werden. Insbesondere können dadurch gegebenenfalls zusätzliche Lichtquellen in Hallen, Lagern, Ställen und Überdachungen eingespart werden. Bei einer weiteren vorteilhaften Ausgestaltung der erfindungsgemäßen Montageanordnung sind die Befestigungsorgane der Profilleisten jeweils in Form eines Klemmelements und den Flächenkörpern zugeordnete Auflager ausgebildet. Insbesondere verfügen die Profilleisten jeweils über zwei seitliche Auflager, wobei jedes seitlichen Auflager einem oder mehreren in Längsrichtung benachbarten Flächenkörpern zugeordnet sind. In Querrichtung benachbarte Flächenkörper sind durch das Klemmelement gegen die beiden seitlichen Auflager klemmbar. Durch diese Maßnahme wird eine kostengünstige und zuverlässige Methode zur Befestigung der Flächenkörper an den Profilleisten geschaffen.

Das Klemmelement ist beispielsweise in Form einer in Längsrichtung sich erstreckenden Klemmleiste ausgebildet, die sich insbesondere auch über mehrere Flächenkörper hinweg erstrecken kann. Zum Klemmen der Flächenkörper ist das Klemmelement beispielsweise mit einer Schraubverbindung so wirkverbunden, dass die Flächenkörper durch Anziehen der Schraubverbindung durch das Klemmelement gegen die Auflager geklemmt werden. Die Schraubverbindung kann beispielsweise ein mit einem Gewinde versehenes erstes Schraubelement und ein mit einem Gegengewinde versehenes zweites Schraubelement umfassen, wobei das Klemmelement zwischen den beiden Schraubelementen angeordnet ist. Das Klemmelement kann zu diesem Zweck beispielsweise von einem Schraubbolzen durchsetzt sein. Von Vorteil ist es, wenn die Klemmelemente von der Oberseite der Flächenkörper nur geringfügig überstehen, also flach sind, so dass eine geringe Verschattung auftritt, was bei Solarmodulen und Solarkollektoren im Hinblick auf die Lichtausbeute vorteilhaft ist.

Die Profilleisten des Traggerüsts können in einfacher Weise als Strangpressprofile beispielsweise aus Stahl oder einem Leichtmetallwerkstoff, wie Aluminium oder eine Aluminiumlegierung, hergestellt sein, wobei durch einen Leichtmetallwerkstoff die Korrosionsbeständigkeit verbessert und die Dachlast verringert werden kann.

Die Erfindung erstreckt sich weiterhin auf ein Bauwerk in Massiv- oder Skelettbauweise, vorzugsweise in Skelettbauweise, das wenigstens eine wie oben beschriebene Montageanordnung zur dachseitigen Montage von Flächenkörpern aufweist. Das Traggerüst der Montageanordnung ist am Dach bzw. an einer Dachkonstruktion, insbesondere an einem Tragwerk eines Bauwerks in Skelettbauweise befestigt, wobei sich die Profilleisten in Richtung der Dachneigung erstrecken. Vorzugsweise bilden die Flächenkörper zumindest einen Teil der Dachhaut des Bauwerks.

Es versteht sich, dass die vorstehend genannten und nachstehend zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nun anhand von Ausführungsbeispielen näher erläutert, wobei Bezug auf die beigefügten Zeichnungen genommen wird. Es zeigen:
- Fig. 1: eine perspektivische Ansicht eines Ausführungsbeispiels der erfindungsgemäßen Montageanordnung zur dachseitigen Montage von Flächenkörpern an einem Bauwerk in Skelettbauweise;
- Fig. 2A-2B: eine Schnittansicht der Montageanordnung von Fig. 1 im Bereich eines Verbindungselements;
- Fig. 3A-3B: eine Schnittansicht einer Variante der Montageanordnung von Fig. 1 im Bereich eines Verbindungselements;
- Fig. 4: eine Schnittansicht einer weiteren Variante der Montageanordnung von Fig. 1 im Bereich eines Verbindungselements;
- Fig. 5: eine Schnittansicht der Montageanordnung von Fig. 1 im Bereich einer Profilleiste;
- Fig. 6: eine Schnittansicht der in Fig. 3A-3B veranschaulichten Variante der Montageanordnung von Fig. 1 im Bereich einer Profilleiste;
- Fig. 7: eine Schnittansicht einer weiteren Variante der Montageanordnung von Fig. 1 im Bereich eines Verbindungselements.

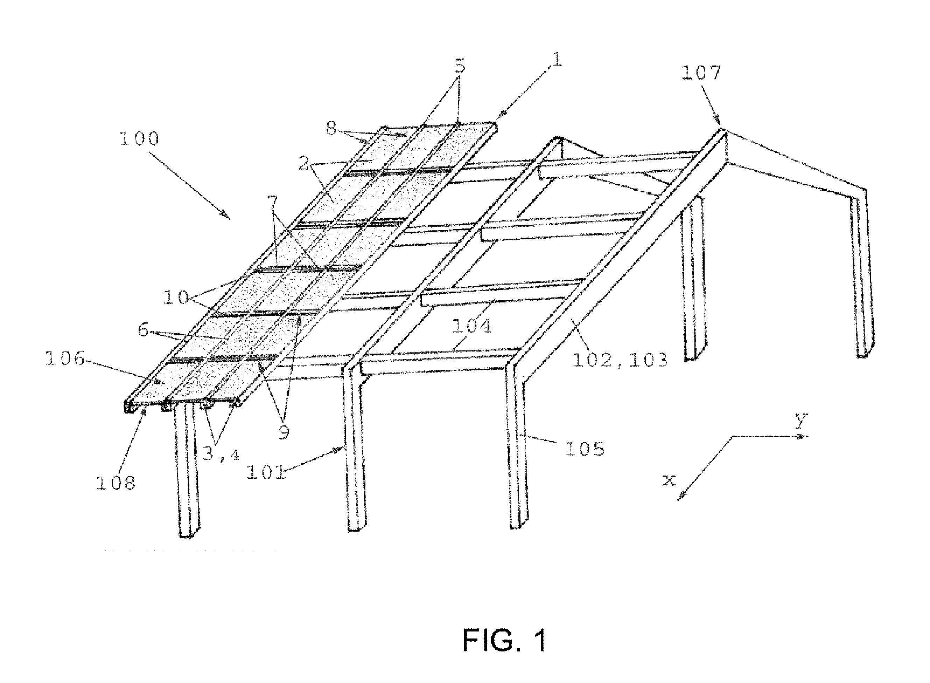

Unter Bezugnahme auf Fig. 1 wird eine insgesamt mit der Bezugszahl 1 bezeichnete Montageanordnung zur dachseitigen Montage von Flächenkörpern 2 an einem Bauwerk 100 in Skelettbauweise beschrieben.

In üblicher Weise umfasst das Bauwerk 100 ein Tragwerk 101, das primär eine tragende, jedoch keine raumabschließende Funktion hat. Zur Formung der Außenhülle sind Platten (nicht gezeigt) vorgesehen, die am Tragwerk 101 befestigt werden. Die Dachform entspricht hier beispielsweise einem Satteldach mit zwei geneigten Dachflächen, die am Dachfirst 107 aufeinander treffen. Die Dachflächen erstrecken sich jeweils von einer unteren Dachtraufe 108 zum Dachfirst 107. Es könnte gleichermaßen eine andere Dachform vorgesehen sein, beispielsweise ein Pultdach oder Schmetterlingsdach, wobei diese Aufzählung nicht abschließend ist. Vorzugsweise umfasst die Dachform eine oder mehrere geneigte Dachflächen. Die Dachhaut 106 des Bauwerks 100 setzt sich aus den beiden geneigten Dachflächen zusammen und wird im vorliegenden Ausführungsbeispiel komplett von den Flächenkörpern 2 gebildet. Bei dem Bauwerk 100 handelt es sich beispielsweise um einen Stall oder eine Halle, insbesondere eine Fertigungs-, Lager-, Verkaufs-, Sport- oder Reithalle.

Das Tragwerk 101 ist aus einer Mehrzahl Trägerbauteile 102 zusammengesetzt. Es umfasst schräg von oben nach unten, d.h. vom Dachfirst 107 zur Dachtraufe 108, verlaufende Riegel 103, welche die Dachneigung vorgeben, horizontale Pfetten 104 zwischen den Riegeln 103 und vertikale Stützen 105, an denen das Tragwerk 101 im Boden verankert ist. Die Trägerbauteile 102 bestehen beispielsweise aus Stahl, Beton (Stahlbeton) oder Holz, wobei gleichermaßen jedes andere Material eingesetzt werden kann, das über eine ausreichende Festigkeit zum Überbrücken großer Stützweiten verfügt. Wie dem Fachmann an sich bekannt ist, bildet jede durch zwei Riegel 103 miteinander verbundene Stütze 105 ein Grundelement im Skelettbau, den so genannten Rahmen (hier Dreigelenkrahmen), worauf hier nicht näher eingegangen werden soll.

Als quader- bzw. rechteckförmige Flächenkörper 2, welche die Dachhaut 106 ausbilden, sind hier beispielsweise transparente Solarmodule vorgesehen, wobei gleichermaßen andere transparente und/oder nichttransparente Dachplatten als Dachhaut 106 eingesetzt werden können.

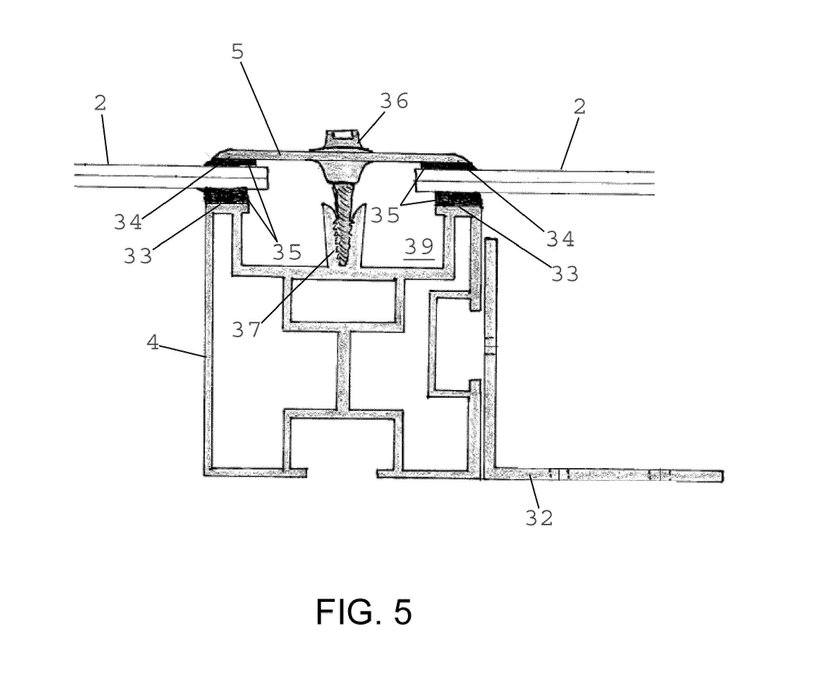

Die Montageanordnung 1 dient zur Montage der Flächenkörper 2 am Tragwerk 101. Zu diesem Zweck umfasst die Montageanordnung 1 ein Traggerüst 3, das aus einer Mehrzahl paralleler Profilleisten 4 besteht, die sich jeweils in Richtung der Dachneigung (Längsrichtung x) vom Dachfirst 107 zur Dachtraufe 108 erstrecken und in einer hierzu senkrechten Richtung (Querrichtung y) parallel zum Dachfirst 107 in einer Reihe nebeneinander angeordnet sind. Durch die Längs- (x) und Querrichtung (y) wird eine Montageebene zur Montage der Flächenkörper 2 aufgespannt. Für eine Befestigung der Flächenkörper 2 weist jede Profilleiste 4 eine Klemmleiste 5 auf, welche im Zusammenhang mit Fig. 5 näher beschrieben wird. Durch die Klemmleiste 5 werden die Flächenkörper 2 an ihren Längsrändern 6, welche parallel zur Längsrichtung x angeordnet sind, an der Profilleiste 4 befestigt. Eine Befestigung erfolgt in Längsrandzonen 8, d.h. in Flächenbereichen der Flächenkörper 2, die sich entlang der Längsränder 6 erstrecken.

Die Montageanordnung 1 umfasst weiterhin eine Mehrzahl Verbindungselemente 10, die jeweils zur festen Verbindung zweier in Längsrichtung x benachbarter Flächenkörper 2 dienen. Durch die Verbindungselemente 10 werden die Flächenkörper 2 an ihren Querrändern 7, welche parallel zur Querrichtung y angeordnet sind, fest miteinander verbunden. Eine feste Verbindung erfolgt in Querrandzonen 9, d.h. in Flächenbereichen der Flächenkörper 2, die sich entlang der Querränder 7 erstrecken. Bei einer möglichen Ausgestaltung sind die Flächenkörper 2 durch die Verbindungselemente 10 starr miteinander verbunden, so dass die Verbindungselemente 10 eine statisch tragende Funktion haben. Bei einer alternativen Ausgestaltung sind die Verbindungselemente 10 nachgiebig ausgebildet, so dass sie sich etwaigen Verformungen der Flächenkörper 2, beispielsweise aufgrund einer Durchbiegung in Querrichtung (y), anpassen können.

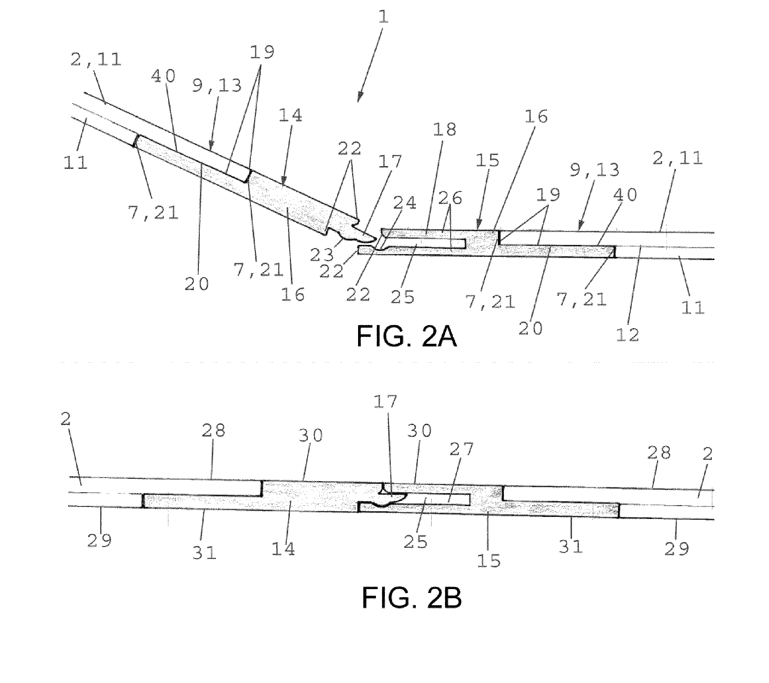

Es wird nun Bezug auf Fig. 2A und 2B genommen, worin anhand einer Schnittansicht (Schnitt in Längsrichtung x) die Montageanordnung von Fig. 1 im Bereich eines Verbindungselements 10 gezeigt ist. Fig. 2A zeigt das Verbindungselement 10 im gelösten Zustand, Fig. 2B im gefügten Zustand.

In Fig. 2A und 2B ist insbesondere die Verbundscheibenstruktur der Flächenkörper 2 erkennbar. Demnach umfasst jeder Flächenkörper 2 zwei starre Einzelscheiben 11 die durch eine thermoplastische Klebschicht 12 beispielsweise aus Polyvinylbutyral (PVB), Ethylen-Vinyl-Acetat (EVA) oder Polyurethan (PU) fest miteinander verbunden sind. Die beiden Einzelscheiben 11 sind beispielsweise aus Glas gefertigt, wobei sie gleichermaßen aus einem nichtgläsernen Material wie Kunststoff hergestellt sein können. Bei der in den Figuren gezeigten Ausgestaltung der Flächenkörper 2 ist ein Querrand 7 der inneren Einzelscheibe 11 gegen einen Querrand 7 der äußeren Einzelscheibe 11 in Längsrichtung x nach innen rückversetzt, so dass sich eine stufenförmige Querrandzone 9 mit einem von der äußeren Einzelscheibe 11 gebildeten Scheibenüberstand 13 ergibt.

Durch die Verbindungselemente 10 können jeweils zwei in Längsrichtung x benachbarte Flächenkörper 2 fest miteinander verbunden werden. Wie in Fig. 2A und 2B gezeigt, besteht jedes Verbindungselement 10 aus einem ersten Verbindungsteil bzw. Verbindungsstück 14 und einem damit verbindbaren bzw. verbundenen zweiten Verbindungsteil bzw. Verbindungsgegenstück 15. In der an einer geneigten Dachfläche des Bauwerks 100 angebrachten Montageanordnung 1 ist das Verbindungsstück 14 an einem (z.B. unteren) Querrand 7 bzw. Querrandzone 9 eines (z.B. oberen) Flächenkörpers 2 befestigt. Das Verbindungsgegenstück 15 ist an einem gegenüberliegenden (z.B. oberen) Querrand 7 bzw. Querrandzone 9 des anderen (z.B. unteren) Flächenkörpers 2 befestigt.

Das Verbindungsstück 14 umfasst einen stufenförmigen Basisabschnitt 16 und einen Vorsprung 17, das Verbindungsgegenstück 15 in entsprechender Weise einen stufenförmigen Basisabschnitt 16 und einen Aufnahmeabschnitt 18 mit einer schlitzförmigen Vertiefung 25 zur Aufnahme des Vorsprungs 17. Die Basisabschnitte 16 sind jeweils in Passform zur Querrandzone 9 des zugehörigen Flächenkörpers 2 ausgebildet, so dass sie passgenau daran angefügt werden können. Dementsprechend kommt der Scheibenüberstand 13 in einer Stufe 40 des Verbindungsstücks 14 bzw. Verbindungsgegenstücks 15 zu liegen. Eine Befestigung von Verbindungsstück 14 und Verbindungsgegenstück 15 am zugehörigen Flächenkörper 2 erfolgt jeweils durch Verklebung, zu welchem Zweck eine Klebzone 19 zwischen dem Basisabschnitt 16 und einer Innenseite 20 der äußeren Einzelscheibe 11 im Bereich des Scheibenüberstands 13 und den jeweiligen Rand- bzw. Stirnflächen 21 der beiden Einzelscheiben 11 ausgebildet wird. Ist das Verbindungselement 10 nachgiebig ausgebildet, kann eine Belastung der Klebzone 19 durch eine Verformung der Flächenkörper 2 vermieden werden.

Der Vorsprung 17 erstreckt sich über die komplette Breite in Querrichtung y des zugehörigen Flächenkörpers 2 und ist senkrecht zur Längs- und Querrichtung gegen zwei Stoßkanten 22 des Basisabschnitts 16 abgesetzt. Hierbei ist die untere Stoßkante 22 gegenüber der oberen Stoßkante 22 in Längsrichtung x versetzt. Zudem ist an den Vorsprung 17 ein in Querrichtung y sich erstreckender Gleitbuckel 23 nach unten hin angeformt.

In entsprechender Weise erstreckt sich der Aufnahmeabschnitt 18 des Verbindungsgegenstücks 15 über die komplette Breite in Querrichtung y des zugehörigen Flächenkörpers 2. Der Aufnahmeabschnitt 18 umfasst zwei einander gegenüberliegende Randleisten 26, die gemeinsam die schlitzförmige Vertiefung 25 formen. Die obere Randleiste 26 ist gegenüber der unteren Randleiste 26 in Längsrichtung x rückversetzt. An der unteren Randleiste 26 ist eine Gleitkehle 24 zur Aufnahme des Gleitbuckels 23 geformt. Die Gleitkehle 24 ist in Passform zum Gleitbuckel 23 ausgebildet. An den Randleisten 26 sind senkrecht zur Längs- und Querrichtung Stoßkanten 22 in Entsprechung zu den Stoßkanten 22 des Basisabschnitts 16 des Verbindungsstücks 14 ausgebildet.

Fig. 2A zeigt das Verbindungselement 10 im gelösten Zustand. Um das Verbindungselement 10 zu fügen und den Vorsprung 17 in die Vertiefung 25 des Verbindungsgegenstücks 15 des (z.B. unteren) Flächenkörpers 2 einzustecken, wird der das Verbindungsstück 14 tragende (z.B. obere) Flächenkörper 2 schräg, in einem von Null verschiedenen Winkel zur Montageebene von oben her in Stellung gebracht. Zu diesem Zweck ist der in den Figuren 2A und 2B nicht dargestellte obere Querrand des Flächenkörpers 2 relativ zur Montageebene angehoben, wohingegen sich der untere Querrand 7 in der Montageebene befindet. Bei der Montage wird zunächst der Vorsprung 17 mit schrägem Flächenkörper 2 in der Vertiefung 25 angesetzt, dann werden die beiden Flächenkörper 2 aufeinander zu bewegt, wobei gleichzeitig der schräg angestellte Flächenkörper 2 in die Montageebene abgesenkt wird, was zur Folge hat, dass der Gleitbuckel 23 in die Gleitkehle 24 gleitet.

Fig. 2B zeigt das Verbindungselement 10 im gefügten Zustand, wobei der Vorsprung 17 in der Vertiefung 25 aufgenommen und der Gleitbuckel 23 in der Gleitkehle 24 aufgenommen, beispielsweise, jedoch nicht zwingend, darin verrastet ist. Im gefügten Zustand ist der Vorsprung 17 kraft- und formschlüssig in der Vertiefung 25 aufgenommen, wobei die Stoßkanten 22 der Randleisten 26 des Verbindungsgegenstücks 15 zur dichtenden Anlage gegen die Stoßkanten 22 des Basisabschnitts 16 des Verbindungsstücks 14 gelangen. Ist ein Einrasten vorgesehen, erfolgt dies vorzugsweise mit einem Einrastgeräusch, so dass der Erfolg der Verrastung akustisch überprüft werden kann.

Im gefügten Verbindungselement 10 sind das Verbindungsstück 14 und das Verbindungsgegenstück 15 fest miteinander verbunden, wobei eine Durchbiegung durch das Ineinandergreifen der beiden Verbindungsteile bei einer starren Verbindung verhindert wird und die Flächenkörper 2 frei tragend miteinander verbunden sind (statisch tragende Funktion). Wie bereits ausgeführt, kann jedoch auch eine lediglich statisch unterstützende Funktion des Verbindungselements 10 vorgesehen sein, bei der das Verbindungselement 10 nachgiebig ausgebildet ist. Das Verbindungselement 10 befindet sich in der gemeinsamen Ebene der beiden Flächenkörper 2, so dass eine montagebedingte Belastung der Flächenkörper 2 in Längsrichtung x vermieden werden kann. Durch die anliegenden Stoßkanten 22 sind die beiden Verbindungsteile des Verbindungselements 10 zumindest annähernd wasserdicht gefügt.

Wie in Fig. 2B gezeigt, ist die Vertiefung 25 in Längsrichtung x größer bemessen als der Vorsprung 17, d.h. der Vorsprung 17 füllt die Vertiefung 25 nicht vollständig aus. Jenseits des Vorsprungs 17 verbleibt somit ein Hohlraum, der als in Querrichtung y verlaufender Querkanal 27 zum Ableiten von in die Vertiefung 25 eindringendem Wasser dient. Bei einer alternativen Variante, die hier nicht gezeigt ist, ist ein solcher Querkanal 27 nicht vorgesehen. In diesem Fall sind der Vorsprung 17 und die Vertiefung 25 in Passform ausgebildet, so dass bei eingestecktem Vorsprung kein Hohlraum in der Vertiefung 25 verbleibt.

Wie in Fig. 2B gezeigt, weist das Verbindungselement 10 eine der äußeren Umgebung des Bauwerks 100 zugewandte (Verbindungselement-)Außenfläche 30 bzw. außenseitige Oberfläche auf, die in Längsrichtung x flächenbündig in der äußeren Umgebung des Bauwerks 100 zugewandte (Flächenkörper-)Außenflächen 28 bzw. außenseitige Oberflächen der beiden angrenzenden Flächenkörper 2 übergeht. Die Außenfläche 30 des Verbindungselements 10 und die Außenflächen 28 der Flächenkörper 2 bilden gemeinsam eine ebene Gesamtaußenfläche der Montageanordnung 1, so dass Wasser leichter ablaufen und Schnee besser abrutschen kann. Zudem kann das Ansammeln von Schmutz vermieden werden. In entsprechender Weise weist das Verbindungselement 10 eine dem Bauwerk 100 zugewandte (Verbindungselement-)Innenfläche 31 bzw. innenseitige Oberfläche auf, die in Längsrichtung x flächenbündig in dem Bauwerk 100 zugewandte (Flächenkörper-)Innenflächen 29 bzw. innenseitige Oberflächen der beiden angrenzenden Flächenkörper 2 übergeht. Die Innenfläche 31 des Verbindungselements 10 und die Innenflächen 29 der Flächenkörper 2 bilden gemeinsam eine ebene Gesamtinnenfläche. Somit steht das Verbindungselement 10 weder auf der Oberseite noch auf der Unterseite der verbunden Flächenkörper 2 hervor, was die Montage an den Profilleisten 4 erleichtert.

Unter Bezugnahme auf Fig. 5 wird nun die Befestigung der Flächenkörper 2 an den Profilleisten 4 näher erläutert. Die Profilleisten 4 sind jeweils als Strangpressprofile beispielsweise aus Stahl oder einem Leichtmetallwerkstoff, wie Aluminium oder eine Aluminiumlegierung, hergestellt. Zu diesem Zweck können dem Fachmann an sich bekannte Strangpressverfahren eingesetzt werden, wobei die Profilleisten 4 durch Ablängen eines vom Presswerkzeug austretenden, profilierten Pressstrangs herstellbar sind. Eine Montage der Profilleisten 4 am Tragwerk 101 erfolgt durch an den Profilleisten 4 angebrachte Montagewinkel 32, die an den Pfetten 104 montiert werden. Beispielsweise werden die Montagewinkel 32 an den Pfetten 104 angeschraubt.

Wie in Fig. 5 gezeigt, weist die Profilleiste 4 zwei seitliche Auflager 33 auf, die sich jeweils in Längsrichtung x erstrecken und zur Auflage von angeordneten Flächenkörpern 2 dienen. Hierbei ist das eine seitliche Auflager 33 einer Mehrzahl in Längsrichtung x angeordneter Flächenkörper 2 auf der einen Seite der Profilleiste 4, das andere seitliche Auflager 33 einer Mehrzahl in Längsrichtung x angeordneter Flächenkörper 2 auf der anderen Seite der Profilleiste 4 zugeordnet. Durch eine Klemmleiste 5, die sich in Längsrichtung x erstreckt, können die Flächenkörper 2 gegen die beiden seitlichen Auflager 33 geklemmt werden. Es versteht sich, dass nicht zwingend eine Verklemmung von in Querrichtung y benachbarten Flächenkörpern 2 erfolgen muss, sondern dass auch nur auf einem seitlichen Auflager 33 Flächenkörper 2 verklemmt sein können, beispielsweise wenn sich die Profilleiste 4 am seitlichen Rand der Montageanordnung 1 befindet. Ebenso wäre es möglich, dass jede Profilleiste 4 mehrere Klemmleisten 5 zur Klemmung der Flächenkörper 2 aufweist.

In Gegenüberstellung zu den beiden seitlichen Auflagern 33 verfügt die Klemmleiste 5 über zwei Klemmflächen 34, welche den Flächenkörpern 2 anliegen. Zwischen den Flächenkörpern 2 und den seitlichen Auflagern 33 sowie den Klemmflächen 34 befindet sich jeweils eine Dichtleiste 35 aus Gummi oder einem anderen geeigneten Dichtmaterial, um das Eindringen von Wasser zu verhindern. Die Klemmleiste 5 wird von einer Mehrzahl in Längsrichtung x verteilt angeordneter Schraubbolzen 36 durchsetzt, die in Gewindehülsen 37 greifen, um die Klemmleiste 5 an der Profilleiste 4 zu befestigen. Durch Anziehen der Schraubbolzen 36 kann die Klemmkraft der Klemmleiste 5 erhöht werden. Die Klemmleiste 5 ist sehr flach und steht nur geringfügig von der Oberfläche der verbundenen Flächenkörper 2 hervor, so dass keine oder nur eine sehr geringe Verschattung der Flächenkörper 2 auftritt, was bei Solarmodulen die Lichtausbeute verbessert. Durch die Klemmleiste 5 können die Flächenkörper 2 einfach und zuverlässig an der Profilleiste 4 befestigt werden.

Die Profilleiste 4 verfügt unterhalb der Klemmleiste 5 zwischen den beiden seitlichen Auflagern 33 über einen zentralen Längskanal 39, der zum Ableiten von Wasser dient, welches insbesondere im Bereich der Klemmflächen 34 und Auflager 33 eindringt. Zudem münden die Querkanäle 27 der Verbindungselemente 10 der an der Profilleiste 4 befestigten Flächenkörper 2 in den zentralen Längskanal 39, so dass die Querentwässerung über den zentralen Längskanal 39 erfolgt. Neben dem zentralen Längskanal 39 verfügt die Profilleiste 4 über nicht näher bezeichnete, weitere Hohlräume, durch welche deren Steifigkeit verbessert wird.

Eine Montage der Flächenkörper 2 am Bauwerk 100 kann in einfacher Weise dadurch erfolgen, dass ein unterster Flächenkörper 2 ausgerichtet wird und der Vorsprung 15 eines weiteren Flächenkörpers 2 von oben her in der Vertiefung 25 in Stellung gebracht wird, gefolgt von einem Absenken des oberen Flächenkörpers 2 um das Eingleiten des Vorsprungs 15 in die Vertiefung 25 zu bewirken. Sobald die Flächenkörper 2 in Längsrichtung x durch die Verbindungselemente 10 verbunden ist, können diese durch die Klemmleisten 5 an den beiden angrenzenden Profilleisten 4 befestigt werden. Auf diese Weise ist eine besonders einfache und schnelle Montage der Flächenkörper 2 beispielsweise durch eine Überkopfmontage ermöglicht. Andererseits können die Flächenkörper 2 sehr einfach demontiert werden, indem der jeweils obere Flächenkörper 2 nach oben hin angewinkelt wird, um die Verbindung des Verbindungselements 10 zu lösen. Ein Lösen des Verbindungselements 10 ist in einfacher Weise zerstörungsfrei möglich.

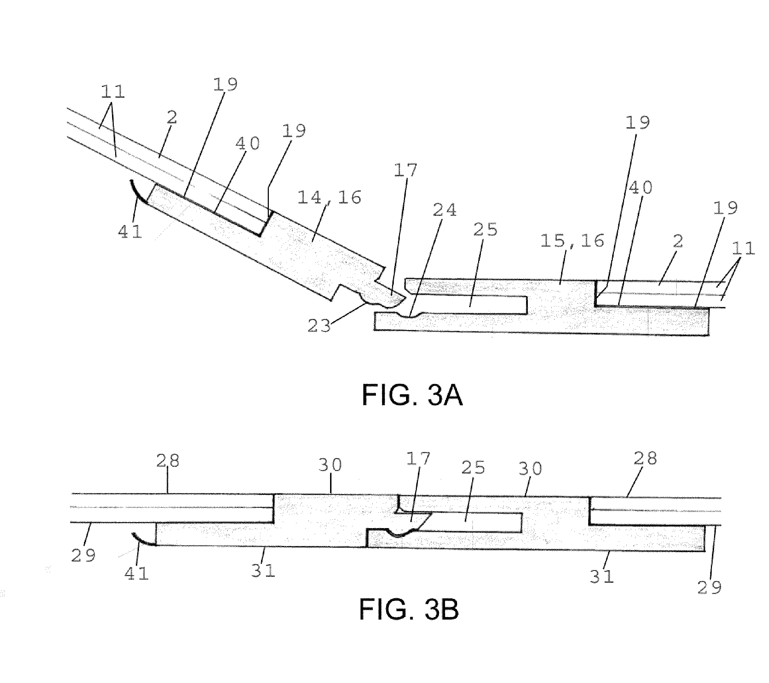

Es wird nun Bezug auf Fig. 3A und 3B genommen, worin anhand einer Schnittansicht (Schnittlinie in Längsrichtung x) eine Variante der Montageanordnung 1 von Fig. 1 veranschaulicht ist. Um unnötige Wiederholungen zu vermeiden, werden lediglich die Unterschiede zu Fig. 2A und 2B erläutert und ansonsten wird auf die dort gemachten Ausführungen Bezug genommen.

Demnach sind die Flächenkörper 2 in Verbundscheibenstruktur ausgebildet, jedoch sind die Querränder 7 der beiden Einzelscheiben 11 nicht gegeneinander versetzt, sondern liegen einander gegenüber. Sowohl das Verbindungsstück 14 als auch das Verbindungsgegenstück 15 umfassen jeweils einen stufenförmigen Basisabschnitt 16 mit einer Stufe 40, in der der Flächenkörper 2 passgenau zu liegen kommt. Eine Befestigung von Verbindungsstück 14 und Verbindungsgegenstück 15 am zugehörigen Flächenkörper 2 erfolgt jeweils durch Verklebung, wobei sich eine Klebezone 19 zwischen dem Basisabschnitt 16 und einer Innenseite 20 der inneren Einzelscheibe 11 und den Rand- bzw. Stirnflächen 21 der beiden Einzelscheiben 11 befindet.

In der in Fig. 3A und 3B gezeigten Variante weist das Verbindungsstück 14 eine in Querrichtung y verlaufende Kondensatrinne 41 auf, die dem Ableiten von Kondenswasser auf der Unterseite der Flächenkörper 2 dient. Die Kondensatrinne 41 ist auf der dem Vorsprung 17 abgewandten Seite an den Basisabschnitt 16 angeformt.

Fig. 3A zeigt das Verbindungselement 10 im gelösten Zustand, Fig. 3B im gefügten Zustand, wobei der Vorsprung 17 in der Vertiefung 25 aufgenommen und der Gleitbuckel 23 mit der Gleitkehle 24 verrastet ist. Wie in Fig. 3B erkennbar, bilden die Außenfläche 30 des Verbindungselements 10 und die Außenflächen 28 der beiden Flächenkörper 2 gemeinsam eine ebene Gesamtaußenfläche. Durch die Befestigung auf der Unterseite der Flächenkörper 2 gilt dies nicht für die Innenfläche 31 des Verbindungselements 10 und die Innenflächen 29 der beiden Flächenkörper 2, die nicht in einer gemeinsamen Ebene liegen. Die Montage der Flächenkörper 2 an den Profilleisten 4 ist entsprechend anzupassen.

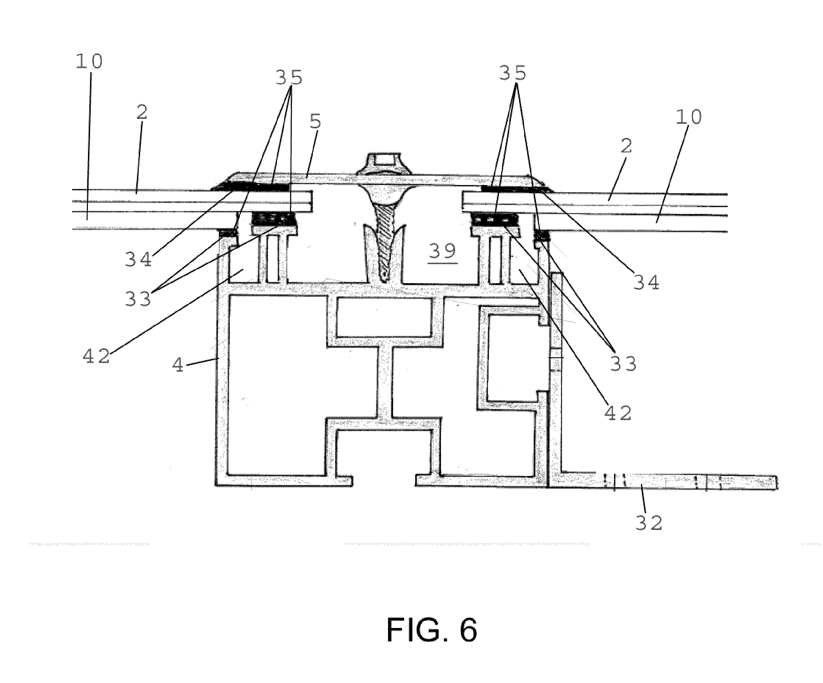

Unter Bezugnahme auf Fig. 6 wird nun die Befestigung der Flächenkörper 2 von Fig. 3A und 3B an den Profilleisten 4 näher erläutert. Um unnötige Wiederholungen zu vermeiden, werden lediglich die Unterschiede zu Fig. 5 erläutert und ansonsten wird auf die dort gemachten Ausführungen Bezug genommen.

Demnach erstrecken sich das Verbindungsstück 14 und das Verbindungsgegenstück 15 jeweils nicht über die komplette Breite in Querrichtung y des zugehörigen Flächenkörpers 2, sondern enden jeweils schon vor den Längsrändern 6. Dementsprechend verfügt die Profilleiste 4 über zwei seitliche innere Auflager 33 für die Flächenkörper 2 und zwei seitliche äußere Auflager 33 für die Verbindungselemente 10 der Flächenkörper 2. Die Klemmflächen 34 der Klemmleiste 5 sind in Gegenüberstellung zu den beiden inneren Auflagern 33 und den beiden äußeren Auflagern 33 angeordnet. Zwischen den inneren Auflagern 33 und den Flächenkörpern 2, zwischen den äußeren Auflagern 33 und den Verbindungselementen 10, sowie zwischen den Klemmflächen 34 und den Flächenkörpern 2 befindet sich jeweils eine Dichtleiste 35 aus Gummi oder einem anderen Dichtmaterial, um das Eindringen von Wasser zu verhindern.

Die Profilleiste 4 verfügt unterhalb der Klemmleiste 5 zwischen den beiden inneren Auflagern 33 über einen zentralen Längskanal 39 und auf jeder Seite zwischen dem inneren Auflager 33 und dem äußeren Auflager 33 über einen seitlichen Längskanal 42. Die beiden seitlichen Längskanäle 42 erstrecken sich in Längsrichtung x. Zwischen den beiden seitlichen Längskanälen 42 befindet sich der zentrale Längskanal 39. Sowohl die Querkanäle 27 der Verbindungselemente 10 als auch die Kondensatrinnen 41 der an der Profilleiste 4 befestigten Flächenkörper 2 münden in den auf derselben Seite befindlichen seitlichen Längskanal 42.

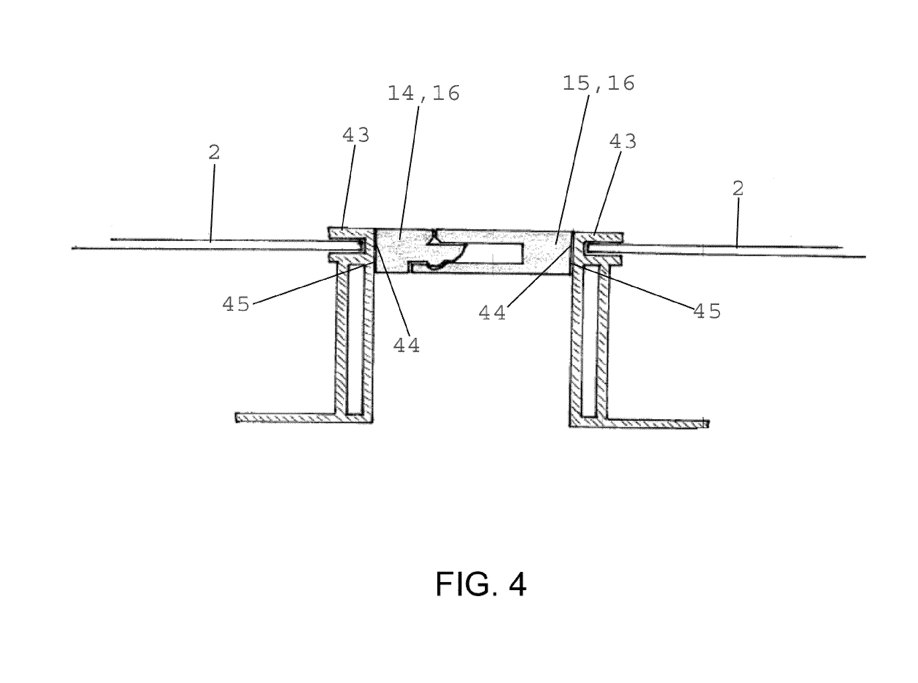

Es wird nun Bezug auf Fig. 4 genommen, worin anhand einer Schnittansicht (Schnittlinie in Längsrichtung x) eine weitere Variante der Montageanordnung 1 von Fig. 1 veranschaulicht ist. Um unnötige Wiederholungen zu vermeiden, werden lediglich die Unterschiede zu Fig. 2B erläutert und ansonsten wird auf die dort gemachten Ausführungen Bezug genommen.

Demnach sind die Flächenkörper 2 jeweils von einem Rahmen 43 beispielsweise aus Metall, insbesondere Aluminium, umgeben. In entsprechender Weise sind die Basisabschnitte 16 des Verbindungsstücks 14 und Verbindungsgegenstücks 15 nicht stufenförmig ausgebildet, sondern sind an einer Basisabschnittstirnfläche 45 beispielsweise durch eine Verklebung mit einer Rahmenstirnfläche 44 fest verbunden. Die Befestigung der Verbindungsteile des Verbindungselements 10 am Rahmen 43 ist in der Regel einfacher zu bewerkstelligen als bei einem rahmenlosen Flächenkörper 2 und kann beispielsweise durch eine Schraub-, Schweiß-, oder Nietverbindung erfolgen.

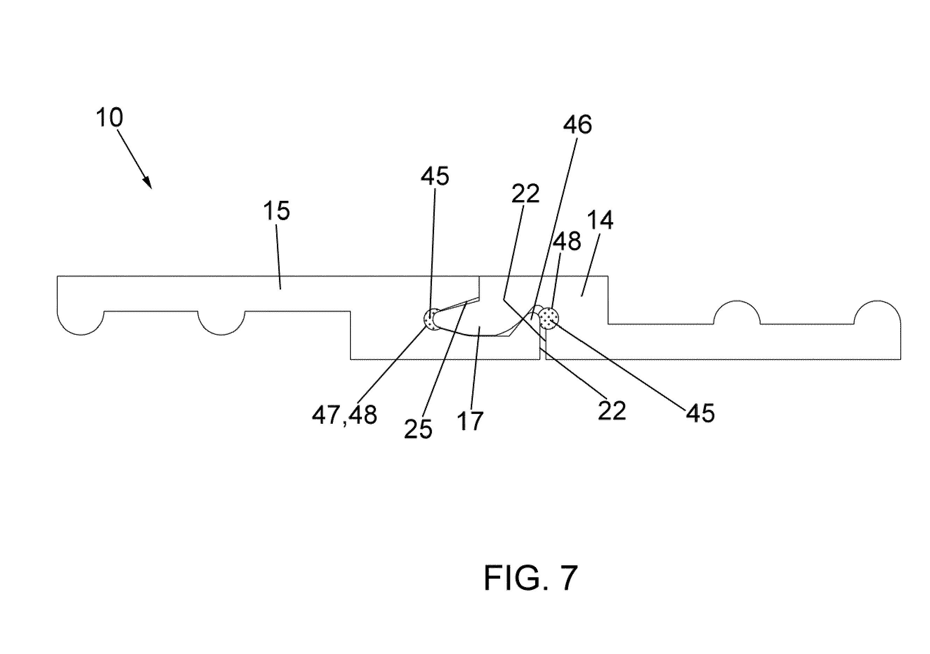

In Fig. 7 ist anhand einer Schnittansicht (Schnittlinie in Längsrichtung x) eine weitere Variante der Montageanordnung 1 von Fig. 1 veranschaulicht ist. Um unnötige Wiederholungen zu vermeiden, werden lediglich die Unterschiede zu Fig. 2B erläutert und ansonsten wird auf die dort gemachten Ausführungen Bezug genommen.

Demnach verfügt die Vertiefung 25 über keinen Querkanal 27, da sie zumindest annähernd vom Vorsprung 17 ausgefüllt wird. Der Vorsprung 17 ist hier lediglich formschlüssig in der Vertiefung 25 aufgenommen, wobei die untere Randleiste 26 zu diesem Zweck einen den Vorsprung 17 hintergreifenden bzw. hinterschneidenden Randleistenabschnitt 46 aufweist. Um die Dichtigkeit des Verbindungselements 10 weiter zu verbessern, sind in Querrichtung (y) sich erstreckende Dichtstränge 45 angeordnet, welche hier beispielsweise in Form von Rundschnurdichtungen ausgebildet sind. Hierbei befindet sich ein Dichtstrang 45 zwischen den beiden unteren Stoßkanten 22 des Verbindungsstücks 14 und Verbindungsgegenstücks 15. Ein weiterer Dichtstrang 45 ist am vorderen Ende des Vorsprungs 17 zwischen dem Vorsprung 17 und einem hinteren Endabschnitt 47 der Vertiefung 25 angeordnet. Die beiden Dichtstränge 45 sind jeweils in zu den Dichtsträngen 45 entsprechend ausgeführten Dichtstrangvertiefungen 48 aufgenommen. Ein besonderer Vorteil ergibt sich dadurch, dass sich die Dichtstränge 45 innerhalb des Verbindungselements 10 befinden, so dass die üblicher Weise aus einem für UV-Licht empfindlichen Material, beispielsweise Gummi, bestehenden Dichtstränge 45 keiner vorzeitiger Alterung unterliegen und dadurch beispielsweise spröde werden.

In der erfindungsgemäßen Montageanordnung 1 können Anschlusskabel für einen elektrischen Außenanschluss der beispielsweise als Solarmodule ausgeführten Flächenkörper 2 innerhalb der in Längsrichtung (x) angeordneten Profilleisten geführt werden. Entsprechendes gilt für Anschlussdosen bzw. Anschlussgehäuse, die als Basis für die Anschlusskabel dienen und weitere elektrische Komponenten wie Dioden und Steuerelektronik enthalten können. Durch die Anschlusskabel können die Solarmodule in Serie verschaltet oder mit einer elektrischen Last, beispielsweise ein Wechselrichter zum Umwandeln der von den Solarmodulen erzeugten Spannung in eine für das öffentliche Netz geeignete Wechselspannung, verbunden werden. Insbesondere kann durch die in den Profilleisten 4 geführten Anschlusskabel eine serielle Verschaltung von Solarmodulen in besonders einfacher und ästhetisch ansprechender Weise erreicht werden.

Die erfindungsgemäße Montageanordnung 1 schafft die Möglichkeit einer einfachen, schnellen und zuverlässigen Dachmontage von Flächenkörpern 2 an einem Bauwerk 100, wobei die Flächenkörper 2 die komplette Dachhaut 106 bilden. Die Flächenkörper 2 können kostengünstig mit den Verbindungsteilen der Verbindungselemente 10 hergestellt und montiert werden. Durch die Verbindungselemente 10 sind die Flächenkörper 2 in Längsrichtung x fest (starr oder nachgiebig) miteinander verbunden, wobei die Verbindungselemente zumindest eine statisch unterstützende, insbesondere eine statisch tragende Funktion ausüben. Durch eine ebene Gesamtaußenfläche werden vorteilhafte Effekte hinsichtlich des Gebrauchs erreicht, beispielsweise ein einfaches Abrutschen von Schnee und die Vermeidung von Schmutzansammlungen. Durch eine ebene Gesamtinnenfläche wird die Montage der Flächenkörper 2 an den Profilleisten 4 erleichtert. Eine Ableitung von Wasser kann sowohl in Quer- als auch in Längsrichtung durch die Quer- und Längskanäle erreicht werden. In vorteilhafter Weise erfolgt eine Ableitung von Kondenswasser durch die Kondensatrinnen 41. Die Montageanordnung 1 zeichnet sich durch ein schlankes und ästhetisches Design aus.

### Bezugszeichenliste

- 1: Montageanordnung
- 2: Flächenkörper
- 3: Traggerüst
- 4: Profilleiste
- 5: Klemmleiste
- 6: Längsrand
- 7: Querrand
- 8: Längsrandzone
- 9: Querrandzone
- 10: Verbindungselement
- 11: Einzelscheibe
- 12: Klebschicht
- 13: Scheibenüberstand
- 14: Verbindungsstück
- 15: Verbindungsgegenstück
- 16: Basisabschnitt
- 17: Vorsprung
- 18: Aufnahmeabschnitt
- 19: Klebzone
- 20: Innenseite
- 21: Stirnfläche
- 22: Stoßkante
- 23: Gleitbuckel
- 24: Gleitkehle
- 25: Vertiefung
- 26: Randleiste
- 27: Querkanal
- 28: Flächenkörperaußenfläche
- 29: Flächenkörperinnenfläche
- 30: Verbindungselementaußenfläche
- 31: Verbindungselementinnenfläche
- 32: Montagewinkel
- 33: Auflager
- 34: Klemmfläche
- 35: Dichtleiste
- 36: Schraubbolzen
- 37: Gewindehülse
- 38: Basisstirnfläche
- 39: zentraler Längskanal
- 40: Stufe
- 41: Kondensatrinne
- 42: seitlicher Längskanal
- 43: Rahmen
- 44: Rahmenstirnfläche
- 45: Dichtstrang
- 46: Randleistenabschnitt
- 47: Endabschnitt
- 48: Dichtstrangvertiefung

- 100: Bauwerk
- 101: Tragwerk
- 102: Träger
- 103: Riegel
- 104: Pfette
- 105: Stütze
- 106: Dachhaut
- 107: Dachfirst
- 108: Dachtraufe

## Patentansprüche

1. Montageanordnung (1) zur dachseitigen Montage von Flächenkörpern (2) an einem Bauwerk (100), welche umfasst:
eine Mehrzahl rechteckförmiger Flächenkörper (2) mit Längs- und Querrändern (6, 7);
ein Traggerüst (3) aus parallelen Profilleisten (4), die sich entlang einer Längsrichtung (x) erstrecken und jeweils über wenigstens ein Befestigungsorgan (5, 33) verfügen, das dazu ausgebildet sind, in einer zur Längsrichtung (x) senkrechten Querrichtung (y) benachbarte Flächenkörper (2) an deren Längsrändern (6) zu befestigen;
eine Mehrzahl Verbindungselemente (10), die jeweils zur Verbindung zweier in Längsrichtung (x) benachbarter Flächenkörper (2) an deren Querrändern (7) dienen, wobei jedes Verbindungselement (10) aus einem an einem Querrand (7) des einen Flächenkörpers (2) befestigten ersten Verbindungsteil (14) und einem an einem gegenüberliegenden Querrand (7) des anderen Flächenkörpers (2) befestigten zweiten Verbindungsteil (15) besteht, wobei der erste Verbindungsteil (14) einen Vorsprung (17) und der zweite Verbindungsteil (15) eine Vertiefung (25) für den Vorsprung (17) aufweist, wobei der Vorsprung (17) in die Vertiefung (25) so einsteckbar ist, dass die beiden Verbindungsteile (14, 15) in Längsrichtung (x) fest miteinander verbunden sind.

2. Montageanordnung (1) nach Anspruch 1, **dadurch gekennzeichnet, dass** in einem jeweiligen Verbindungselement (10) der Vorsprung (17) und die Vertiefung (25) so ausgebildet sind, dass sie form- und/oder kraftschlüssig miteinander verbunden sind.

3. Montageanordnung (1) nach einem der Ansprüche 1 oder 2, **dadurch gekennzeichnet, dass** in einem jeweiligen Verbindungselement (10) die beiden Verbindungsteile (14, 15) so ausgebildet sind, dass der Vorsprung (17) mit einem zu einer durch die Längs- (x) und Querrichtung (y) aufgespannten Montageebene schräg angestellten Flächenkörper in der Vertiefung (25) ansetzbar und durch Zueinanderbewegen der Flächenkörper (2) sowie Absenken des schräg angestellten Flächenkörpers (2) bis zur Montageebene in die Vertiefung (25) gleiten kann.

4. Montageanordnung (1) nach Anspruch 3, **dadurch gekennzeichnet, dass** in einem jeweiligen Verbindungselement (10) die beiden Verbindungsteile (14, 15) so ausgebildet sind, dass der Vorsprung (17) durch schräges Anstellen zur Montageebene eines Flächenkörpers (2) und Auseinanderbewegen der Flächenkörper (2) aus der Vertiefung (25) gleiten kann.

5. Montageanordnung (1) nach Anspruch 3 und 4, **dadurch gekennzeichnet, dass** in einem jeweiligen Verbindungselement (10) der Vorsprung (17) über einen Gleitbuckel (23) und die Vertiefung (25) über eine insbesondere in Passform ausgebildete Gleitkehle (24) zum Ein- bzw. Ausgleiten des Gleitbuckels (23) verfügt.

6. Montageanordnung (1) nach einem der Ansprüche 1 bis 5, **dadurch gekennzeichnet, dass** zwei in Längsrichtung (x) benachbarte Flächenkörper (2) durch das Verbindungselement (10) starr miteinander verbunden sind.

7. Montageanordnung (1) nach einem der Ansprüche 1 bis 5, **dadurch gekennzeichnet, dass** die Verbindungselemente jeweils nachgiebig ausgebildet sind, derart, dass sie geeignet sind, sich einer Verformung eines Flächenkörpers (2), beispielsweise einer Durchbiegung in Querrichtung (y), anzupassen.

8. Montageanordnung (1) nach einem der Ansprüche 1 bis 7, **dadurch gekennzeichnet, dass** der Vorsprung (17) und die Vertiefung (25) so ausgebildet sind, dass sie miteinander verrastbar sind.

9. Montageanordnung (1) nach Anspruch 8, **dadurch gekennzeichnet, dass** der Vorsprung (17) und die Vertiefung (25) so ausgebildet sind, dass beim Einrasten des Vorsprungs (17) in die Vertiefung (25) ein hörbares Einrastgeräusch erzeugt werden kann.

10. Montageanordnung (1) nach einem der Ansprüche 1 bis 9, **dadurch gekennzeichnet, dass** die Verbindungselemente (10) jeweils über Außenflächen (30) verfügen, die mit Außenflächen (28) der Flächenkörper (2) zur Formung einer ebenen Gesamtaußenfläche bündig abschließen.

11. Montageanordnung (1) nach einem der Ansprüche 1 bis 10, **dadurch gekennzeichnet, dass** die Verbindungselemente (10) jeweils über Innenflächen (31) verfügen, die mit Innenflächen (29) der Flächenkörper (2) zur Formung einer ebenen Gesamtinnenfläche bündig abschließen.

12. Montageanordnung (1) nach einem der Ansprüche 1 bis 11, **dadurch gekennzeichnet, dass** sich die Profilleisten (4) in Richtung einer Dachneigung des Bauwerkdachs (100) erstrecken, wobei die Profilleisten (4) jeweils mit wenigstens einem in Längsrichtung (x) verlaufenden Längskanal (39, 42) zur Wasserableitung versehen sind, und insbesondere jeweils einen zentralen Längskanal (39) und zwei seitliche Längskanäle (42) umfassen.

13. Montageanordnung (1) nach Anspruch 12, **dadurch gekennzeichnet, dass** die Verbindungselemente (10) jeweils mit einem in Querrichtung (y) verlaufenden Querkanal (27) zur Wasserableitung versehen sind, wobei der Querkanal (27) an seinen Enden jeweils in einen Längskanal (39, 42) einer Profilleiste (4) mündet.

14. Montageanordnung (1) nach einem der Ansprüche 12 oder 13, **dadurch gekennzeichnet, dass** die Verbindungselemente (10) jeweils mit einer in Querrichtung (y) verlaufenden Kondensatrinne (41) zum Auffangen und Ableiten von an der Innenfläche (29) der Flächenkörper (2) kondensierendem Wasser versehen sind, wobei die Kondensatrinne (41) an ihren Enden jeweils in einen Längskanal (39, 42) einer Profilleiste (4) mündet.

15. Montageanordnung (1) nach einem der Ansprüche 1 bis 14, **dadurch gekennzeichnet, dass** die Flächenkörper (2) zumindest einen Teil einer Dachhaut (106) des Bauwerks (100) bilden.
